Europäisches Patentamt

European Patent Office

Office européen des brevets

(19)

(11) Veröffentlichungsnummer: **0 167 964**
**A2**

(12) # EUROPÄISCHE PATENTANMELDUNG

(21) Anmeldenummer: **85108160.4**

(22) Anmeldetag: **01.07.85**

(51) Int. Cl.⁴: **F 04 B 21/02**

(30) Priorität: **12.07.84 DE 8420824 U**

(43) Veröffentlichungstag der Anmeldung:
**15.01.86 Patentblatt 86/3**

(84) Benannte Vertragsstaaten:
**AT BE CH DE FR LI NL**

(71) Anmelder: **Jeromin, Karl**
**Reuthebogen 19**
**D-8860 Nördlingen(DE)**

(72) Erfinder: **Jeromin, Karl**
**Reuthebogen 19**
**D-8860 Nördlingen(DE)**

(74) Vertreter: **Munk, Ludwig, Dipl.-Ing.**
**Patentanwalt Prinzregentenstrasse 1**
**D-8900 Augsburg(DE)**

(54) Rückschlagventil für eine Saugleitung.

(57) Bei einem Rückschlagventil (1) für eine zu einer Pumpe (3) führenden Saugleitung (4) mit einem Ventilgehäuse (5a, 5b), das mit einem Ventilsitz (6) versehen ist, der einen hiermit zusammenwirkenden, axial bewegbaren Rückschlagkörper (7) hintergreift, läßt sich dadurch unabhängig von der Ausrichtung des Ventilgehäuses (5a, 5b) eine hohe Funktionssicherheit gewährleisten, daß der Rückschlagkörper (7) mittels mindestens einer konzentrisch zu seiner Achse hieran angreifenden Zugfeder (14) am zugeordneten Ventilsitz (6) zur Anlage bringbar ist. Hierdurch wird erreicht, daß der Rückschlagkörper (7) in jedem Falle in zuverlässige Anlage am Ventilsitz (6) gebracht wird.

EP 0 167 964 A2

./...

**0167964**

## Rückschlagventil für eine Saugleitung

Die Erfindung betrifft ein Rückschlagventil für eine zu einer Pumpe führende Saugleitung mit einem Ventilgehäuse, das mit einem Ventilsitz versehen ist, der einen hiermit zusammenwirkenden, axial bewegbaren Rückschlagkörper untergreift.

Eine Anordnung dieser Art dient dazu, beim Abschalten der Pumpe ein Zurückströmen der in der Saugleitung sich befindenden Wassersäule und damit ein Trockenlaufen der Pumpe beim nächsten Anfahrvorgang zu vermeiden. Bei den gebräuchlichen Anordnungen eingangs erwähnter Art ist der Rückschlagkörper mit axialem Bewegungsfreiheitsgrad so in das Ventilgehäuse eingelegt, daß der durch den von der Pumpe erzeugten Unterdruck vom zugeordneten Dichtsitz abgehoben und beim Abschalten der Pumpe durch seine Schwerkraft und den von der darüber sich befindenden Wassersäule hierauf ausgeübten Druck zur Anlage am Dichtsitz gebracht wird. Die Erfahrung hat nun gezeigt, daß Anordnungen dieser Art nur dann zufriedenstellend funktionieren, d. h. die Wassersäule in der Saugleitung halten, wenn die Achse des Ventilgehäuses genau lotrecht ausgerichtet ist. Sofern dies nicht der Fall ist, besteht die Gefahr, daß kein zuverlässiger Verschluß der Saugleitung erreicht wird. Die Folge davon ist, daß die in der Saugleitung sich befindende Wassersäule mehr oder weniger schnell aus der Saugleitung auslaufen kann. Zur Vermeidung von Trockenlauf der Pumpe muß daher bei jedem Anfahrfahrvorgang Wasser in die Saugleitung eingefüllt werden, was sich als sehr umständlich uns zeitraubend erweist. Sofern dies übersehen werden sollte, besteht die Gefahr eines sehr schnellen Verschleißes der Pumpe. Die bekannten Anordnungen erweisen sich demnach als nicht zuverlässig und bedienungsfreundlich genug.

Hiervon ausgehend ist es daher die Aufgabe der vorliegenden Erfindung, unter Vermeidung der Nachteile der bekannten Anordnugnen ein Rückschlagventil eingangs erwähnter Art mit einfachen und kostengünstigen Mitteln so zu verbessern, daß unabhängig von der Ausrichtung des Ventilgehäuses eine hohe Funktionssicherheit gewährleistet ist.

Diese Aufgabe wird erfindungsgemäß dadurch gelöst, daß der Rückschlagkörper mittels mindestens einer konzentrisch zu seiner Achse hieran angreifenden Zugfeder am zugeordneten Ventilsitz zur Anlage bringbar ist.

Die Verwendung einer Zugfeder ermöglicht in vorteilhafter

0167964

- 3 -

Weise eine genaue zentrische Beaufschlagung des Rückschlagkörpers durch die Federkraft. Hierdurch ist sichergestellt,
daß der Rückschlagkörper unabhängig von der Lage des Ventilgehäuses und unabhängig vom Gewicht der hierauf ruhenden
Wassersäule nicht nur an den zugeordneten Ventilsitz herangeholt, sondern auch auf seinem ganzen Umfang gleichmäßig
in Anlage am Ventilsitz gebracht und gehalten wird. Die vorteilhafte Folge davon ist, daß in jeder Lage des Ventilgehäuses und bei jeder Länge der Saugleitung eine zuverlässige
Dichtwirkung erreicht und damit die Wassersäule in der Saugleitung gehalten wird. Die Pumpe ist daher in vorteilhafter
Weise jederzeit betriebsbereit, was sich als sehr bedienungsfreundlich und materialschonend erweist. Ein weiterer Vorteil der erfindungsgemäßen Maßnahmen ist darin zu sehen, daß
zur Bildung der Saugleitung hier ohne weiteres ein in sich
beweglicher Schlauch Verwendung finden kann, ohne daß die
Funktionsfähigkeit des Rückschlagventils hierdurch beeinträchtigt würde. Die umständliche und aufwendige Montage stationärer, durch Rohre gebildeter Saugleitungen kann daher entfallen.*/* Ein weiterer, besonderer Vorteil der erfindungsgemässen Maßnahmen ist darin zu sehen, daß die hier verwendete
Zugfeder ohne weiteres auch nachträglich in bereits vorhandene Rückschlagventile eingebaut werden kann, so daß auch
eine nachträgliche Ausrüstung bereits vorhandener Rückschlagventile mit der erfindungsgemäßen Rückschlagfeder vorgenommen werden kann.

Man könnte zwar auch daran denken, anstelle der erfindungsgemäßen Zugfeder eine dem Rückschlagkörper zugeordnete Druckfeder vorzusehen. Hiermit ließe sich jedoch nicht dieselbe
Wirkung wie mit der erfindungsgemäßen Zugfeder erreichen.
Im Falle einer Druckfeder wäre nämlich keine zentrale Kraft- */* was einen höchst variablen Einsatz der Pumpe ermöglicht.

0167964

- 4 -

einleitung in den Rückschlagkörper gewährleistet, da eine Druckfeder im Bereich ihrer Enden bekanntlich in Form einer jeweils halben Windung ausläuft, so daß sich hier eine Auflage nur im Bereich einer halben Windung und damit eine exzentrische Krafteinleitung ergibt. Zur Vermeidung eines einseitigen Drucks wäre es daher erforderlich, eine exakte Längsführung des Rückschlagkörpers vorzusehen. Da beim Ansaugen von ungeklärten Flüssigkeiten jedoch mit in dieser vorhandenen Schweb- und Schmutzpartikeln gerechnet werden muß, wäre auch in einem derartigen Fall eine geringe Zuverlässigkeit zu befürchten, da die Schweb- und Schmutzpartikel zwischen die Führungsflächen gelangen und zu einem Klemmen führen könnten. Ganz abgesehen davon würde jedoch die Herstellung einer derart exakten Führung einen außerordentlich hohen Aufwand erfordern. Mit den erfindungsgemässen Maßnahmen werden ersichtlich auch die vorstehend geschilderten nachteile auf höchst einfache Weise vermieden.

In vorteilhafter Weiterbildung der übergeordneten Maßnahmen kann die Spannung der Zugfeder einstellbar sein. Diese Maßnahme ermöglicht eine Anpassung der Federspannung an die Verhältnisse des Einzelfalls und erhöht damit die Zuverlässigkeit der Gesamtanordnung.

Eine weitere zweckmäßige Maßnahme kann darin bestehen, daß bei einem Rückschlagkörper, der mit seine Dichtfläche untergreifenden Führungsflügeln versehen ist, diese im Bereich ihrer vorderen Enden abgerundet sind. Diese Abrundung bildet dabei in vorteilhafter Weise eine Anlauffläche, die sicherstellt, daß der Rückschlagkörper auch im Falle eines sehr großen Hubs durch die hieran angreifende Federkraft in die gewünschte Lage zurückgeführt wird.

- 5 -

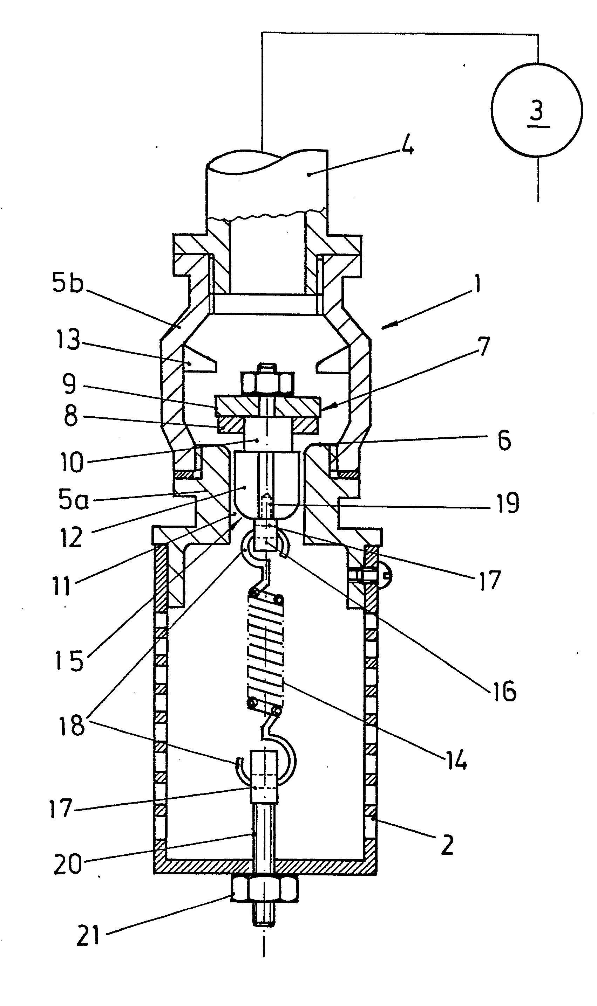

Weitere zweckmäßige Ausgestaltungen und vorteilhafte Weiterbildungen der übergeordneten Maßnahmen ergeben sich aus der nachstehenden Beschreibung eines Ausführungsbeispiels anhand der Zeichnung in Verbindung mit den restlichen Unteransprüchen.

Die einzige Figur der Zeichnung zeigt einen Axialschnitt durch ein erfindungsgemäßes Rückschlagventil im Betriebszustand.

Das in der Zeichnung dargestellte, als Ganzes mit 1 bezeichnete Rückschlagventil ist zwischen einem Saugkorb 2 und dem saug-korbseitigen Ende einer zu einer Pumpe 3 führenden Saugleitung 4 angeordnet. Das Rückschlagventil 1 besteht aus einem zweiteiligen Ventilgehäuse 5a, 5b, das mit einem in axialer Richtung verlaufenden Strömungsweg für die über den Saugkorb 2 anzusaugende Flüssigkeit versehen ist. Im Bereich dieses Strömungswegs ist ein durch eine umlaufende Innenschulter gebildeter Ventilsitz 6 vorgesehen, mit dem ein hiervon untergriffener, in axialer Richtung bewegbarer Rückschlagkörper 7 zusammenwirkt.

Der Rückschlagkörper 7 besteht aus einem mit einem Dichtring 8 versehenen Keller 9, das an einen Zapfen 10 angesetzt ist, der in eine von der den Ventilsitz 6 bildenden Schulter begrenzte Axialbohrung 11 des Ventilgehäuses eingreift. Im dargestellten Ausführungsbeispiel sind in axialer Verlängerung des Zapfens 10 drei um 120° gegeneinander versetzte, mit großem radialem Bewegungsspiel in die Axialbohrung 11 eingreifende, schmale Führungsflügel 12 vorgesehen, die sicherstellen, daß der Dichtring 8 des Rückschlagkörpers 7 in zuverlässigen Eingriff mit dem zugeordneten Ventilsitz 6 gebracht werden kann. Das Ventilgehäuse besteht aus einem im Bereich seines unteren Endes den Saugkorb 2 aufnehmenden und im Bereich seines oberen Endes mit dem Ventilsitz 6 versehenen Unterteil 5a und einem auf dieses aufschraubbaren, an der Saugleitung 4 festlegbaren 5b, das den Teller 9 des Rückschlagkörpers 7 umfaßt und den Hub des Rückschlagkörpers 7 begrenzende Anschläge 13 aufweist.

Am unteren Ende des Rückschlagkörpers 7 greift eine koaxial hierzu angeordnete Zugfeder 14 an, die mit ihrem vom Rückschlagkörper 7 entfernten Ende am Boden des Saugkorbes 2 abgestützt ist und die den Rückschlagkörper 7 an den zugeordneten Ventilsitz 6 heranholt. Solange die Pumpe 3 in Betrieb ist, wird in der Saugleitung 4 ein Unterdruck erzeugt, durch den der Rückschlagkörper 7 entgegen der Kraft der Zugfeder 14 vom zugeordneten Ventilsitz 6 abgehoben wird. Sobald dieser Unterdruck entfällt, holt die Zugfeder 14 den Rückschlagkörper 7 unabhängig von der hieran angreifenden Schwerkraft, also auch unabhängig von der Ausrichtung, d. h. von der Stellung der Achse, des Ventilgehäuses 5a, 5b, zuverlässig an den Ventilsitz 6 heran. Die Führungsflügel 12 sind im Bereich des Übergangs zwischen ihrer vorderen, vom Dichtring 8 des Rückschlagkörpers 7 entfernten Stirnseite und ihrer radial äußeren Seitenkante mit einer Abrundung 15 versehen. Hierdurch ergeben sich somit abgerunde-te Anlaufflächen, so daß der Zapfen 10 des Rückschlagkörpers 7 unter der Wirkung der Zugfeder 14 aus jeder Lage in die Bohrung 11 einläuft, womit eine zuverlässige Anlage des Dichtrings 8 am Ventilsitz 6 gewährleistet wird.

Der Kraftangriff der Zugfeder 14 am Rückschlagkörper 7 erfolgt genau zentrisch. Hierzu ist der Rückschlagkörper 7 mit einem an seinem unteren Ende angebrachten, koaxial hierzu angeordneten Zapfen 16 versehen, an dem die Zugfeder 14 angreift. Hierzu ist der Zapfen 16 mit einer Querbohrung 17 versehen, durch den eine zugeordnete Einhängkröpfung 18 der Zugfeder 14 hindurchgreift. Der Zapfen 16 kann an den Rückschlagkörper 7 angeformt sein. Im dargestellten Ausführungsbeispiel ist der Zapfen 16 mit einem Gewindeschaft 19 versehen, der in eine zugeordnete, hier im Bereich der Kreuzung der Führungsflügel 12 vorgesehene Gewindebohrung eingeschraubt ist, was sich insbesondere bei nachträglicher Ausrüstung eines gattungsgemäßen Rückschlagventils mit einer Zugfederanordnung als zweckmäßig erweist.

Das vom Rückschlagkörper 7 entfernte Ende der Zugfeder 14 ist ebenfalls mit einer Einhängkröpfung 18 versehen, die durch eine Querbohrung 17 eines koaxial zum Zapfen 16 angeordneten, am Boden des Saugkorbes 2 abgestützten Stifts 20 hindurch-greift. Dieser Stift 20 ist hier als Gewindestift ausgebildet, der den Boden des Saugkorbs 2 durchsetzt und mit seinem über den Saugkorbboden nach unten überstehenden Ende in eine Mutter 21 eingreift, die sich auf dem Saugkorbboden abstützt. Durch Verdrehen der Mutter 21 läßt sich hierbei die Vorspannung der Zugfeder 14 regulieren.

Vorstehend ist zwar ein besonders bevorzugte Ausführungsbeipiel der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der vorliegenden Erfindung an die Verhältnisse des Einzelfalls anzupassen.

- 8 -

So könnte anstelle einer einzigen Zugfeder 14 auch eine
Federanordnung mit mehreren konzentrisch zur Achse des
Ventilkörpers 7 angeordneten bzw. hieran angreifenden
Zugfedern vorgesehen sein.

0167964

A n s p r ü c h e

1. Rückschlagventil (1) für eine zu einer Pumpe (3) führende Saugleitung (4) mit einem Ventilgehäuse (5a, 5b), das mit einem Ventilsitz (6) versehen ist, der einen hiermit zusammenwirkenden, axial bewegbaren Rückschlagkörper (7) hintergreift, dadurch gekennzeichnet, daß der Rückschlagkörper (7) mittels mindestens einer konzentrisch zu seiner Achse hieran angreifenden Zugfeder (14) am zugeordneten Ventilsitz (6) zur Anlage bringbar ist.

2. Rückschlagventil nach Anspruch 1, dadurch gekennzeichnet, daß die einerseits am Rückschlagkörper (7) angreifende Zugfeder (14) andererseits am Boden eines am unteren Ende des Ventilgehäuses (5a, 5b) festgelegten Saugkorbs (2) befestigt ist.

3. Rückschlagventil nach einem der vorhergehenden Ansprüche, dadurch gekennzeichnet, daß die Spanung der Zugfeder (14) einstellbar ist.

4. Rückschlagventil nach einem der vorhergehenden Ansprüche, dadurch gekennzeichnet, daß die Zugfeder (14)
saugkorbseitig an einem koaxial hierzu angeordneten,
vorzugsweise mit einer Querbohrung (17) versehenen
Gewindestift (20) angreift, der den Boden des Saugkorbs (2) durchsetzt und mit seinem nach unten hierüber überstehenden Ende in eine verstellbare Mutter
(21) eingreift.

5. Rückschlagventil nach einem der vorhergehenden Ansprüche bei dem der Rückschlagkörper mit in eine
stromaufwärts an den Ventilsitz sich anschließende
Axialbohrung eingreifenden Führungsflügeln versehen
ist, dadurch gekennzeichnet, daß die Führungsflügel
(12) im Bereich des Übergangs zwischen ihrer vorderen, vom Rückschlagkörper abgewandten Stirnseite und
ihrer radial äußeren Seitenkante abgerundet sind.

6. Rückschlagventil nach einem der vorhergehenden Ansprüche, dadurch gekennzeichnet, daß der Rückschlagkörper (7) mit einem der Zugfeder (14) zugeordneten,
koaxial angeordneten, vorzugsweise mit einer Querbohrung (17) versehenen Zapfen (16) versehen ist.

7. Rückschlagventil nach einem der vorhergehenden Ansprüche, dadurch gekennzeichnet, daß die Zugfeder
(14) im Bereich ihrer Enden jeweils eine Einhängkröpfung (18) aufweist.

0167964